# EUROPEAN PATENT APPLICATION

(11) **EP 3 520 602 A1**
(43) Date of publication of application: **07.08.2019**
(21) Application number: 19155064.9
(22) Date of filing: 01.02.2019
(51) Int. Cl.: A01G 9/04, A01G 13/10

(54) **CULTIVATION APPARATUS**

(30) Priority: 01.02.2018 IT 201800002308
(71) Applicant: Teraplast S.p.A., 36070 Castelgomberto (Vicenza) (IT)
(72) Inventor: MASELLO, Giovanni Franco, 36070 Castelgomberto (VIcenza) (IT)
(74) Representative: Manfrin, Marta

(57) **Abstract**

The present disclosure refers to a "self-irrigating" cultivation apparatus for growing plants. In particular, the cultivation apparatus comprises a pot and a flowerpot dish device coupled to said pot. The flowerpot dish device comprises a flowerpot dish container, adapted to contain an irrigation liquid, and at least one anti-insect protection body. The latter comprises a plate portion provided with through holes coupled, by means of at least one coupling element, to the flowerpot dish container or to the pot so as to prevent the access of insects to its interior.

## Description

The present disclosure refers to a cultivation apparatus including an anti-insect protection body, as well as a method for preparing and/or managing a cultivation apparatus.

In recent years, cultivation systems and apparatuses have been developed to independently dispense irrigation liquids, such as water and/or fertilizers, to vegetable crops. Among these, the so-called "self-irrigating" or "water conserved" devices have been widely diffused, especially for domestic applications, because they allow reducing the frequency of watering of the plant while guaranteeing an irrigation constant over time.

These "self-irrigating" cultivation apparatuses include a pot with a perforated bottom wherein the plant to be cultivated and its soil are housed, and a flowerpot dish with the function of reservoir or reserve of irrigation liquid. The container pot is coupled to the flowerpot dish, at least at its bottom. Then, the water and/or the fertilizer stored in the flowerpot dish are gradually transferred by osmosis, through the openings on the bottom of the pot, to the soil of the plant. Generally, these apparatuses are also equipped with a drainage opening, communicating with the external space, placed in the flowerpot dish, for the leakage of any excess water. In fact, in the case of excessive watering or if the "self-irrigating" cultivation apparatus is placed outdoors, the flowerpot dish may be overfilled with irrigation liquid or rainwater, compromising the proper functioning of the apparatus and threatening to cause choking or rotting of plant roots.

It is also known that the presence of a water tank, which is in fact stagnant water, favors the presence of insects, in particular mosquitoes, which nest in the flowerpot dish or lay their eggs in the irrigation liquid contained therein.

To overcome this drawback, different chemical formulations of insecticides or pesticides are known which, when added to the irrigation liquid stored in the flowerpot dish, make the latter an inhospitable environment for nesting insects and for laying eggs and/or growing larvae of such insects. However, these insecticides and pesticides are highly polluting for the environment and, in the long run, can compromise the health of the plant.

Therefore, on the basis of these observations, the purpose of the present disclosure is to provide an improved alternative to prevent the deposit of eggs by insects in "self-irrigating" cultivation apparatuses with respect to the use of insecticides or pesticides, thus allowing to overcome the drawbacks mentioned above with reference to the prior art.

This object is achieved through a cultivation apparatus and a method according to the respective independent claims.

Preferred features of the present disclosure are also the subject of the dependent claims.

The cultivation apparatus according to the present disclosure includes a pot and flowerpot dish container, the latter adapted to contain an irrigation liquid, and at least one anti-insect protection body comprising a plate portion provided with through holes coupled, through at least one coupling element, to said flowerpot dish container or to said pot. Alternatively, the cultivation apparatus comprises a pot and an anti-insect protection body coupled to a mantle portion of said pot. In other words, in this alternative embodiment the flowerpot dish container is not present. The protection body is designed to prevent the access of insects to the inside of the container or the pot. The protection body is therefore a grid body or a filter body which allows to block an entry of insects into the flowerpot dish device or into the pot.

Preferably, the anti-insect protection body is a body structurally separated from the respective flowerpot dish container, or with respect to the pot, and is configured to be coupled to the flowerpot dish container as necessary.

Preferably, the flowerpot dish container or the pot can also be provided with one or more recesses or holes, for draining any rainwater or drainage liquids present in excess in the flowerpot dish device or in the pot. The insect protection body is placed at each recess or drain hole.

The present disclosure provides some relevant advantages.

The main advantage consists in the fact that the protection body can mechanically prevent the access of the insects into the inside of the flowerpot dish container or of the pot and, therefore, it does not constitute a danger for the environment and for the health of the plant.

According to a preferred aspect, the cultivation apparatus comprises a flowerpot dish device particularly suitable for being coupled to a pot to form a cultivation apparatus for the cultivation of plants. The pot has a perforated bottom, which allows, in use, to the plant contained within it, to absorb the irrigation liquid from the flowerpot dish container. It is therefore a self-irrigation cultivation apparatus.

It follows that a cultivation apparatus including the flowerpot dish device and the pot can be provided, and wherein the access of mosquitoes in the flowerpot dish device can be prevented.

If there is a drain hole or recess in the container under the pot, or between the container under the pot and the pot, or, again, in the pot, the protection device can be placed only in correspondence with the recess or drain hole. The protection body can therefore have small and confined dimensions, such as to cover the hole or drainage recess. The drainage hole can be defined between the pot and the flowerpot dish and obtained by a particular shape of the pot and flowerpot dish.

In an embodiment, preferably, the pot rests on a free edge of the flowerpot dish container, to close the flowerpot dish container. In this configuration, the pot and the flowerpot dish container preferably form a substantially closed body, in which the flowerpot dish container is preferably accessible through only the drainage hole or cavity. In other words, the flowerpot dish is flush with the pot, and the only way to access the flowerpot is the drainage hole.

Even more preferably, the protection body can be arranged over or between the flowerpot dish device and the overlying pot, so as to ensure complete closure of the drainage hole, i.e. of the access area to the flowerpot dish container.

Preferably again, the flowerpot dish container may be provided with one or more indentation adapted to receive a corresponding coupling element of the anti-insect protection body. The indentation is therefore formed on the free edge of the flowerpot dish container and can completely accommodate the coupling element so that it does not protrude with respect to the free edge of the flowerpot dish container. In this way, the pot that is placed above the flowerpot dish container can be in full support on the free edge of the flowerpot dish container, without any openings or slits. The only access opening, i.e. the drain hole or recess, is therefore protected by the anti-insect protection body.

According to another aspect of the present disclosure, it is envisaged to use a filter protection body for a flowerpot dish device and / or for a cultivation apparatus including a pot and a flowerpot dish device. The protection body can be a structurally independent and / or individually maneuverable device that is associated with the flowerpot dish device.

In accordance with another aspect of the present disclosure, a method is provided for managing a plant in a cultivation apparatus provided with a pot and a flowerpot dish device, or just a pot. The method involves using a filter protection body. The filter protection body is a body that filters, and prevents an access of insects in a flowerpot dish container, and / or in general in a reservoir of water that is associated with a pot. The filter protection body can be placed in correspondence of a respective hole or opening existing between the pot and the flowerpot dish device, or of a hole in the pot, and close an access to the device under the pot through said opening. The hole or opening can be a drain hole to let out an excess of water present in the flowerpot dish device.

The protection body can be a structurally independent and/or individually maneuverable device which is associated with the flowerpot dish device when necessary. Alternatively, it cannot be excluded that the protection body can be a device made as one piece with the flowerpot dish or with the pot.

Other advantages, features and methods of use of the present disclosure will be apparent from the following detailed description of some embodiments, presented by way of example and not of limitation.

### Brief description of the figures

Reference will be made to the figures of the accompanying drawings, in which:
- Figure 1 shows a perspective view of a flowerpot dish device according to an embodiment of the present disclosure;
- Figure 2 shows a rear perspective view of the detail II of the flowerpot dish device of Figure 1;
- Figure 3 shows a front perspective view of a detail II of the flowerpot dish device of Figure 1;
- Figure 4 shows a perspective view of a flowerpot dish container of the flowerpot dish device of Figure 1;
- Figure 5 shows a perspective view of the detail V of the flowerpot dish container of Figure 4;
- Figure 6 shows a perspective view from above of a cultivation apparatus an embodiment of the present disclosure;
- Figure 7 shows a front view of the cultivation apparatus of Figure 6;
- Figure 8 shows a view according to the section line VIII-VIII of Figure 7.

### Detailed description of preferred embodiments

With reference to the attached Figures, the present invention refers to a cultivation apparatus, in particular a "self-irrigating" cultivation apparatus, denoted as a whole by the reference 300.

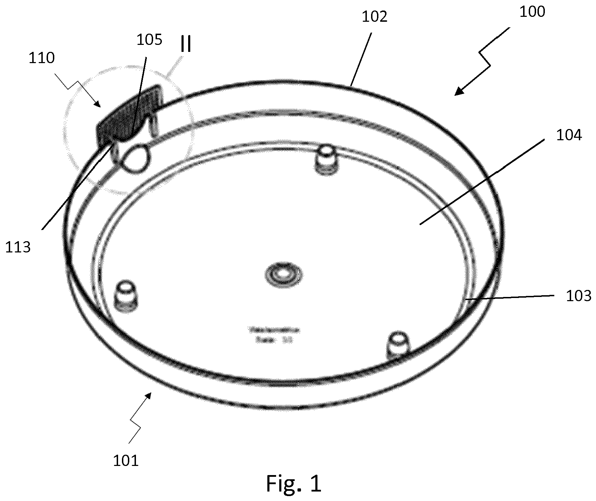

With reference initially to Figure 1, the cultivation apparatus 300 according to the present invention can comprise a flowerpot dish device, denoted by 100, adapted to be associated with a plant cultivation apparatus, in particular to a "self-irrigating" cultivation apparatus, 300, for example for domestic use, or in general for example for private use. In other words, the irrigation apparatus 300 according to the present disclosure is preferably a small-scale plant cultivation system.

This flowerpot dish device 100 comprises a flowerpot dish container 101 and at least one anti-insect protection body 110, substantially a filter, adapted to be associated with the flowerpot dish container 101.

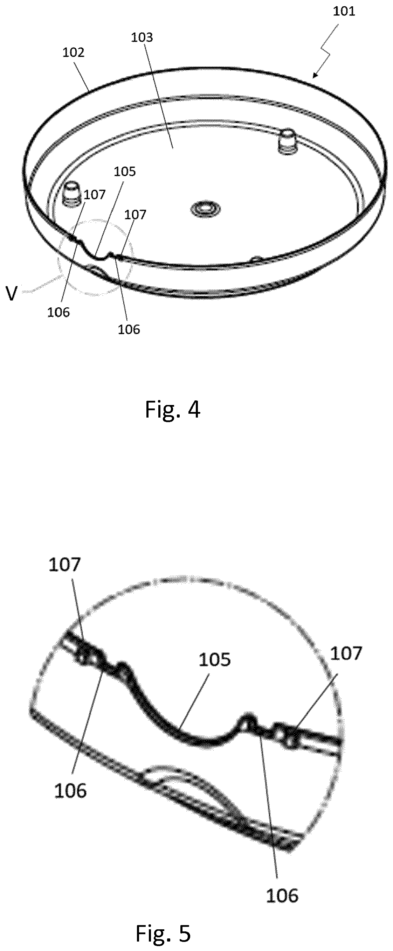

Specifically, as shown in Figure 1 and Figure 4, the flowerpot dish container 101 includes a side wall 102 and a bottom wall 103, joined together in a single body so as to define a hollow region 104 suitable for containing a liquid. The side wall 102 and the bottom wall 103 in fact form an open container, substantially flat in shape with a raised edge.

Preferably, an edge of the side wall 102 is continuous with the perimeter of the bottom wall 103, while the other edge of the side wall, "free edge", is not in contact with said bottom wall 103. In this way, in use, the bottom wall 103 of the flowerpot dish container 101 rests at the bottom on a supporting surface, such as for example a floor or the ground.

The hollow region 104 of the flowerpot dish container 101 is configured as a chamber open towards the top, so as to be able to contain, in use, an irrigation liquid. In fact, the hollow region 104 acts as a reservoir, or reserve, for water and/or fertilizer.

To prevent the irrigation liquid from reaching a too high level within the hollow region 104, the flowerpot dish container 101 is provided with at least one drainage recess 105 on the side wall 102. The recess 105 is in this case a recess formed in the free edge. In other words, preferably the drainage recess 105 is a groove, or inlet, or recess, present on the free edge of the side wall 102, shown in detail in Figure 5. In other embodiments, not shown, the drain recess can be replaced by an opening or through hole formed in the side wall 102. The drainage recess 105 or other openings on the side wall 102 represent an access to a hollow region 104 of the flowerpot dish device 100.

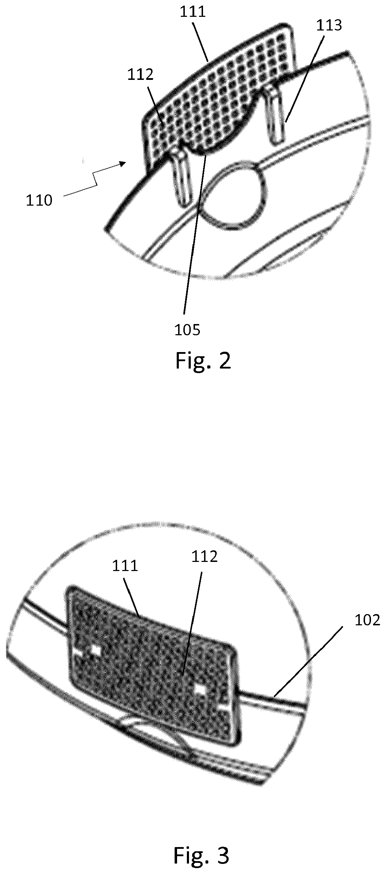

The flowerpot dish device 100 further comprises at least one anti-insect protection body 110, associated with the flowerpot dish container 101. The anti-insect protection body 110 is particularly visible in Figures 1-3. The anti-insect protection body 110 comprises a plate portion 111, or plate, and at least one coupling element 113 for hooking the plate portion 111 to the side wall 102 of the flowerpot dish container 101.

The plate portion 111 is provided with a plurality of through holes 112, with dimensions preferably comprised between 1 and 4 mm². In other words, therefore, the anti-insect protection body 110 is a filter protection body. In fact, the perforated plate acts as a protection filter, or as a screen for retaining insects outside the hollow region 104.

Preferably, the plate portion 111, once connected to the side wall 102, occupies a confined area of the latter. In other words, when coupled to the flowerpot dish container 101, the plate portion 111 covers a circumscribed and limited area of the side wall 102. Furthermore, preferably, the plate portion 112 is connected to the side wall 102 of the flowerpot dish container 101 externally with respect to the hollow region 104.

The plate portion 111 is sized to adequately cover the recess 105. It follows that the plate portion 112 of each insect protection body 110 is connected to the side wall 102 at each recess 105.

The at least one coupling element 113 is preferably a cantilever element, with an "L" shape, or a hook, which is positioned on the free edge of the side wall 102 of the flowerpot dish container 101. Alternatively, the coupling element 113 it can be a "plug" element, or a button element, or any element that allows the protection body to be joined to the flowerpot dish container.

Furthermore, the free edge of the side wall 102 of the flowerpot dish container preferably has, for each coupling element 113 of the anti-insect protection body 110, an indentation 106, that is a groove, which acts as a seat for housing it, receiving, or wedging it. Even more preferably, each indentation 106 has a profile able to completely accommodate a coupling element 113 inside so that it does not protrude with respect to the free edge of the side wall 102. In other words, when housed inside an indentation 106, the coupling element 113 is flush with the free edge of the side wall 102.

In addition, as shown in Figure 5, the side wall 102 of the flowerpot dish container 101 can have one or more protruding elements 107, or plug bodies, able to be engaged, substantially in a jointed manner, inside the holes 112 of the portion plate 111 of the anti-insect protection body 110.

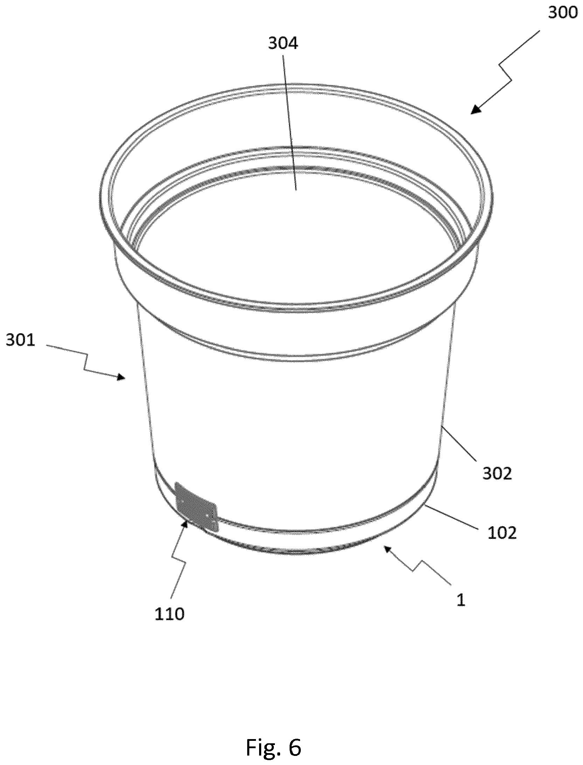

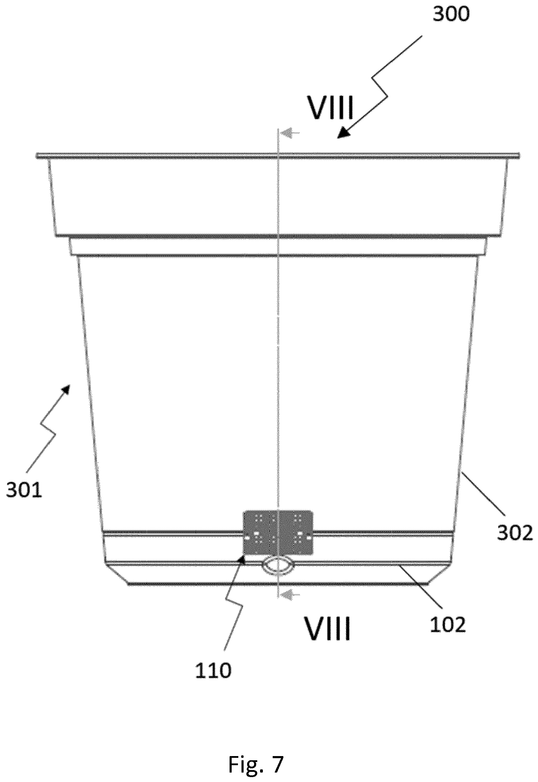

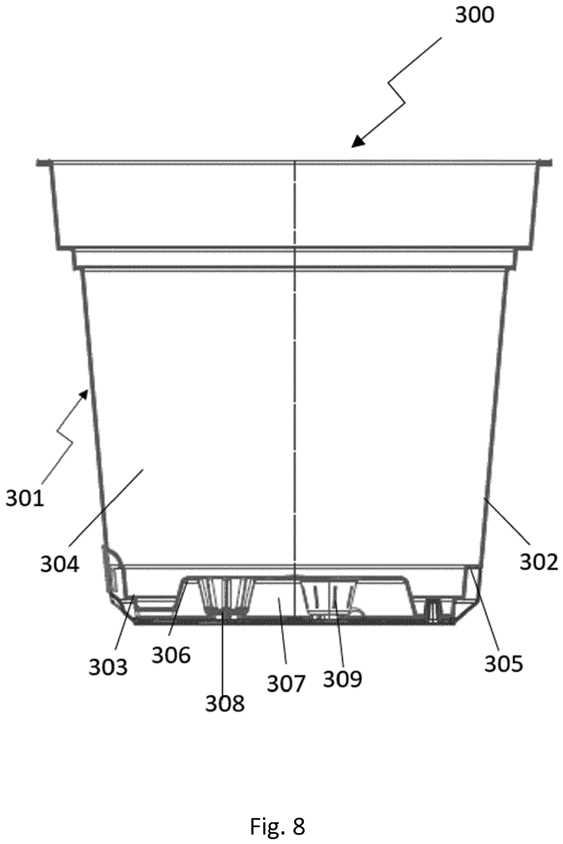

The cultivation apparatus 300, in particular of the "self-irrigating" type, as shown in Figures 6-8, further comprises a pot 301 coupled with a flowerpot dish protection device 100 for anti-insect protection, as described above. Specifically, the pot 301 includes, in turn, a mantle portion 302 and a bottom portion 303, provided with openings 309. The mantle portion 302 and the bottom portion 303 form a single piece and define a hollow region 304 in which, in use, the plant to be cultivated and its soil is placed.

Preferably the bottom portion 303 forms with the mantle portion 302 a step 305, which defines a perimeter recess. The step 305 therefore determines a local reduction of the cross section of the hollow region 304. In other words, the mantle portion 302 protrudes radially with respect to the bottom portion 303 to form the step 305 with the bottom portion 303. With the term "radially" we mean in a generic and general way that the mantle portion 302 protrudes outwards with respect to the bottom portion 303, independently of a possible circular section shape.

The pot 301 is associated with the flowerpot dish device 100 at least in correspondence with the bottom wall 103 of the flowerpot dish container 101. This coupling can be obtained, for example, through male-female elements present respectively on the container pot 301 and on the bottom wall 103 of the flowerpot dish container 101. In particular, the bottom portion 303 is preferably adapted to be received inside the hollow region 104 of the flowerpot dish container 101. The step 305 preferably rests on the free edge of the side wall 102 of the flowerpot dish container 101. Preferably, the step 305 can be made in such a way that, once in contact with the free edge of the side wall 102 of the flowerpot dish container 101, the mantle portion 302 of the pot 301 and the side wall 102 of the flowerpot dish container 101 form a substantially continuous surface, or in general they close the access to the flowerpot dish container 101, apart from the drainage recess. Therefore, the presence of the indentation 106 allows, as mentioned, to completely close the access to the flowerpot dish container 101.

Furthermore, preferably, the plate portion 111 of the anti-insect protection body 110 occupies an area straddling the side wall 102 of the flowerpot dish container 101 and the mantle portion 302 of the pot 301. Thus, at the same time, the plate portion 111 of the anti-insect protection body 110 lies and covers a part of the side wall 102 of the flowerpot dish container 101 and part of the mantle portion 302 of the pot 301.

Finally, the bottom portion 303 can have a recess 306 which protrudes internally towards the hollow region 304 of the pot 301. In other words, such recess 306 forms with the side wall 102 and the bottom wall 103 of the container under table 101 a substantially closed chamber 307, with the exception of possible drainage openings or recesses 105 on the side wall 102 and of the same openings 309 of which the bottom portion 303 is provided. Preferably, in this configuration, the through openings 309 are slots present in correspondence with one or more protruding elements 308 extending towards the bottom wall 103 of the flowerpot dish container 101.

In combination or as an alternative to what has been said previously, the protection body 100 can be associated, through the at least one coupling element 113, to the pot 301, in particular to the mantle portion 302 of the pot 301.

According to a further embodiment, the cultivation apparatus 300 comprises a pot 301 in turn comprising a mantle portion 302 and a bottom portion 303 which define a hollow region 304, wherein the mantle portion 302 comprises at least one drainage recess or a through drainage opening. According to this embodiment, the cultivation apparatus further comprises at least one anti-insect protection body 110 able to cover the drain or drain opening of the mantle portion 302 of the pot 301. The anti-insect protection body comprises a plate portion 111 provided with through holes 112 and at least one coupling element 113 for connecting said plate portion 111 to the mantle portion 302 of the pot 301. In practice, the flowerpot dish is absent. The function of the flowerpot dish can be carried out inside the pot, providing stones or clay, which prevent the earth or soil from being soaked in water. The drainage hole can be placed at a level of separation between earth or soil and the stones/clay below.

Furthermore, according to an embodiment, the anti-insect protection device 110 can be made in one piece with the pot 301 and/or the flowerpot dish device 100. In other words, according to this aspect, the anti-insect protection device is made jointly with the pot 301 and/or the flowerpot dish device 110, for example by molding to form a single body with such element(s).

The present disclosure also relates to a method for managing a plant. This method provides a providing step of a cultivation apparatus 300 which comprises a pot 301 possibly coupled with a flowerpot dish container 101. The pot 301 or the flowerpot dish container 101 also comprise a hole or access opening for access to a hollow region 304, 104 respectively of the pot 301 or of the flowerpot dish container 101. The method further provides supplying a filter protection body 110 and positioning said filter protection body 110 at said access hole 105.

According to a preferred aspect, this filter protection body 110 is a structurally independent and/or individually maneuverable element or device. In this way, such a filter protection body 110 can be associated, if necessary, with the pot 301 or the flowerpot dish container 101.

The present disclosure has been described up to now with reference to preferred embodiments. It is to be understood that there may be other embodiments that refer to the same inventive concept, as defined by the scope of the protection of the claims set forth below.

## Claims

1. Cultivation apparatus (300) comprising:
a)
- a pot (301) comprising a mantle portion (302) and a bottom portion (303), with through openings (309), wherein said mantle portion (302) and said bottom portion (303) define a hollow region (304), destined in use to contain a plant and a topsoil;
- a flowerpot dish device (100) coupled to said pot (301), the flowerpot dish device (100) comprising a flowerpot dish container (101) including a bottom wall (103) and a side wall (102) defining a hollow region (104), destined in use to contain an irrigation fluid, wherein at least a portion of the mantle portion (302) and the bottom portion (303) of the pot (301) are apt to be received inside the hollow region (104) of the flowerpot dish container (101)
- wherein the side wall (102) of the flowerpot dish container (101) has at least one drainage recess (105) or a drainage through opening, or wherein the pot (301) and the flowerpot dish defines a drainage recess (105) or a drainage through opening,
- the flowerpot dish device (100) or the pot (301) further comprising at least an anti-insect protection body (110), comprising a plate portion (111) provided with through holes (112) and at least one coupling element (113) for connecting said plate portion (111) to the side wall (102) of the flowerpot dish container (101) or to the mantle portion (302) of the pot (301) respectively;
and wherein
- the anti-insect protection body (110) is apt to cover the drainage recess (105) or drainage through opening;
or
b)
comprising a pot (301) comprising a mantle portion (302) and a bottom portion (303), wherein the mantle portion (302) has at least a drainage recess (105) or a through opening, the cultivation apparatus (300) further comprising at least an anti-insect protection body (110) comprising a plate portion (111) provided with through holes (112) and at least one coupling element (113) for connecting said plate portion (111) to the mantle portion (302) of the pot (301), whereon the anti-insect protection body (110) is apt to cover the drainage recess (105) or drainage through opening.

2. Cultivation apparatus (300) according to claim 1, wherein, in case of option a), the mantle portion (302) forms with the bottom portion (303) a step (305) apt to define a perimetric recess, and wherein said step (305) leans against the free edge of the side wall (102) of the flowerpot dish container (101) or flush with the free edge of the side wall (102) of the flowerpot dish container.

3. Cultivation apparatus (300) according to claim 2, wherein the mantle portion (302) of the pot (301) and the side wall (102) of the flowerpot dish container (101) form a substantially continuous surface.

4. Cultivation apparatus (300) according to any one of the preceding claims, wherein the plate portion (111) of the anti-insect protection body (110) covers a confined or smaller area than an area of the side wall (102) of the flowerpot dish container (101) or of the mantle portion (302) of the pot (301) respectively.

5. Cultivation apparatus (300) according to anyone of the preceding claims, wherein, in case of option a), the plate portion (111) of the anti-insect protection body (110) is connected to the side wall (102) of the flowerpot dish container (101) externally with respect to the hollow region (104).

6. Cultivation apparatus (300) according to anyone of the preceding claim, wherein, in case of option a), the side wall (102) of the flowerpot dish container has a free edge and the coupling element (113) is a "L"-shaped cantilever element apt to be placed on the free edge of the side wall (102) of the flowerpot dish container (101).

7. Cultivation apparatus (300) according to the preceding claim, wherein, in case of option a), the free edge of the side wall (102) of the flowerpot dish container (101) has, for each coupling element (113) of the anti-insect protection body (110), an indentation (106) apt to receive or house said coupling element (113).

8. Cultivation apparatus (300) according to the preceding claim, wherein each coupling element (113), once housed in the indentation (106) on the side wall (102) of the flowerpot dish container (101), does not protrude from the free edge of said side wall (102).

9. Cultivation apparatus (300) according to anyone of the preceding claims, wherein, in case of option a), the side wall (102) of the flowerpot dish container (102) has at least one protruding element (107) apt to be engaged in one of the through holes (112) of the plate portion (111) of the anti-insect protection body (110).

10. Cultivation apparatus (300) according to anyone of the preceding claims, wherein the coupling element is a button fastening device.

11. Method for managing a plant comprising a step of providing a cultivation apparatus (300) comprising a pot (301) coupled with a flowerpot dish container (101) or a pot (301), providing a filter protection body (110) and placing said filter protection body (110) at a respective hole or access opening (105) of the flowerpot dish container (101) or of the pot (301), said access hole or opening (105) being a hole for access to a hollow region (104, 304) of the flowerpot dish container (101) or of the pot (301), or a drainage hole.

12. Method according to claim 11, wherein the filter protection body (110) is a structurally independent and/or individually maneuverable device which is associated with the pot (301) or the flowerpot dish container (101) as necessary.
